# EUROPÄISCHE PATENTANMELDUNG

(11) **EP 1 519 477 A1**
(43) Veröffentlichungstag der Anmeldung: **30.03.2005**
(21) Anmeldenummer: 04013802.6
(22) Anmeldetag: 11.06.2004
(51) Int. Cl.: H02P 7/00, H02P 7/05

(54) **Fehlertoleranter Reluktanzmotor**

(30) Priorität: 24.09.2003 DE 10344183
(71) Anmelder: ROBERT BOSCH GMBH, 70442 Stuttgart (DE)
(72) Erfinder: Watscher, Markus, 6020 Innsbruck (AT); Dilger, Elmar, 70771 Leinfelden-Echterdingen (DE); Karrelmeyer, Roland, 71254 Ditzingen (DE)

(57) **Zusammenfassung**

Elektrisch kommutierender Motor, insbesondere geschalteter Reluktanzmotor, umfassend zwei zueinander bewegliche Basiselemente, nämlich einen Rotor (12) und einen Stator (11), welche beide je eine Mehrzahl von Polen (S1a, S2a, S3a, S1b, S2b, S3b; R1a, R2a, R1b, R2b) zur Zusammenwirkung mit Polen (R1a, R2a, R1b, R2b; S1a, S2a, S3a, S1b, S2b, S3b) des jeweils anderen Basiselementes (11, 12) aufweisen, wobei Pole (S1a, S1b; S2a, S2b; S3a, S3b) wenigstens eines Basiselementes (11) einander paarweise zugeordnet und mit elektrisch leitfähigen Wicklungen (W1a, W1b; W2a, W2b; W3a, W3b) zur Beaufschlagung mit einem gesteuerten elektrischen Strom versehen sind und weiter umfassend Stromsteuermittel (22), welche für jedes Polpaar (S1a, S1b; S2a, S2b; S3a, S3b) derart eingerichtet sind, dass im Betriebsfall die Wicklungen (W1a, W1b) auf Polen eines Paares (S1a, S1b) von jeweils separaten Schaltmitteln (23) während eines gemeinsamen Steuerintervalls mit Strom beaufschlagt werden, während die Wicklungen (W3a, W3b) eines benachbarten Polpaares (S3a, S3b) gemeinsam während eines zeitversetzten Steuerintervalls mit Strom beaufschlagt werden, wobei die Schaltmittel (23) geeignet ausgelegt sind, im Störungsfall in der Wicklung (W1b) eines Pols (S1b) zusätzlich zu der Beaufschlagung der verbleibenden Wicklung (W1a) des gestörten Polpaares (S1a, S1b) die Wicklungen (W3a, W3b) eines benachbartes Polpaares (S3a, S3b) jeweils mit einem elektrischen Strom zu beaufschlagen, wobei einer der zusätzlichen Ströme eine gegenüber der Richtung im ungestörten Betriebsfall umgekehrte Stromrichtung hat.

## Beschreibung

Die Erfindung bezieht sich auf einen elektrisch kommutierenden Motor, insbesondere geschalteten Reluktanzmotor, umfassend zwei zueinander bewegliche Basiselemente, nämlich einen Rotor und einen Stator, welche beide je eine Mehrzahl von Polen zur Zusammenwirkung mit Polen des jeweils anderen Basiselementes aufweisen, wobei Pole wenigstens eines Basiselementes einander paarweise zugeordnet und mit elektrisch leitfähigen Wicklungen zur Beaufschlagung mit einem gesteuerten elektrischen Strom versehen sind und weiter umfassend Stromsteuermittel, welche für jedes Polpaar derart eingerichtet sind, dass im Betriebsfall die Wicklungen auf Polen eines Paares von jeweils separaten Schaltmitteln, welche mit wenigstens einer Stromquelle verbunden sind, während eines gemeinsamen Steuerintervalls mit Strom beaufschlagt werden, während die Wicklungen eines benachbarten Polpaares gemeinsam während eines zeitversetzten Steuerintervalls mit Strom beaufschlagt werden.

Die Erfindung bezieht sich weiter auf ein Verfahren zur Ansteuerung eines elektrisch kommutierenden Motors, insbesondere geschalteten Reluktanzmotors, umfassend zwei zueinander bewegliche Basiselemente, nämlich einen Rotor und einen Stator, welche beide je eine Mehrzahl von Polen zur Zusammenwirkung mit Polen des jeweils anderen Basiselementes aufweisen, wobei Pole wenigstens eines Basiselementes einander paarweise zugeordnet und mit elektrisch leitfähigen Wicklungen zur Beaufschlagung mit einem gesteuerten elektrischen Strom versehen sind, wobei für jedes Polpaar im Betriebsfall die Wicklungen auf Polen eines Paares von jeweils separaten Schaltmitteln, welche mit wenigstens einer Stromquelle verbunden sind, während eines gemeinsamen Steuerintervalls mit Strom beaufschlagt werden, während die Wicklungen eines benachbarten Polpaares gemeinsam während eines zeitversetzten Steuerintervalls mit Strom beaufschlagt werden.

### Stand der Technik

Bei sicherheitsrelevanten Anwendungen ist die Fehlertoleranz von Elektromotoren ein entscheidendes Kriterium. Insbesondere im modernen Kraftfahrzeugbau wird der Einsatz von Elektromotoren auch bei sicherheitsrelevanten Anwendungen immer populärer. Beispielhaft sei hier die "by wire"-Technologie genannt. So ist beispielsweise bei einem "steer by wire"-System keine mechanische Kraftübertragung zwischen Lenkrad und Rädern mehr vorgesehen.

Vielmehr wird die Radstellung mittels eines Elektromotors aufgrund von elektrischen Steuerbefehlen des Fahrers verändert. Es ist offensichtlich, dass die Fehlertoleranz des Elektromotors bei derartigen Anwendungen ein höchst kritisches Kriterium ist.

Zur Erhöhung der Fehlertoleranz werden vielfach redundante Systeme verwendet. Beispielsweise wirken zwei Motoren auf eine Welle, so dass bei Ausfall eines Motors durch den zweiten Motor wenigstens eine Notfunktion gegeben ist. Aufgrund ihrer doppelten Auslegung sind solch redundante Systeme jedoch im Hinblick auf Kosten, Gewicht und Baugröße nachteilig.

Ein anderer Ansatz besteht darin, die Fehlertoleranz des Elektromotors selbst zu erhöhen. Ein Beispiel dafür ist der in DE 40 08 606 A1 offenbarte Reluktanzmotor. Dabei handelt es sich um einen Motor, bestehend aus einem im Wesentlichen kreuzförmigen Rotor, der von einem rotationssymmetrischen Stator mit sechs nach innen weisenden Polen versehen ist. Jeder Pol des Stators ist mit einer separaten Wicklung umgeben, so dass der Motor bei geeignet zeitversetzter Beaufschlagung der Wicklungen mit elektrischen Strömen betrieben werden kann. Jeweils zwei Pole des Stators sind einander diametral gegenüberliegend angeordnet. Diese sollen im Folgenden als Polpaare bezeichnet werden. Die beiden Wicklungen eines Polpaares sind miteinander nicht elektrisch verbunden, sondern an separate Schaltmittel, nämlich Wechselrichter mit jeweils drei Phasen, angeschlossen. Die Wechselrichter werden von Steuermitteln in Abhängigkeit von der Motorbewegung, das heißt insbesondere von dessen Geschwindigkeit, Winkelstellung und beabsichtigter Drehrichtung, angesteuert. Die Ansteuerung der Wechselrichter erfolgt so, dass die Wicklungen jeweils eines Polpaares zeitgleich, das heißt während eines gemeinsamen Steuerintervalls, über die korrespondierenden Phasenzweige der Wechselrichter bestromt werden, wenn sich ein korrespondierendes Polpaar des kreuzförmigen Rotors in ihrer Nähe befindet. Bei geeignet gewählter Wickelrichtung beziehungsweise Stromrichtung, ergibt sich durch Flussverkettung ein magnetischer Fluss durch Rotor und Stator, welcher auf den Rotor ein entsprechendes Drehmoment ausübt. Nähert sich der Rotor einer symmetrischen Stellung zu den bestromten Statorpolen, wird deren Bestromung beendet und ein benachbartes Polpaar des Stators während eines zweiten Steuerintervalls bestromt.

Durch die unabhängige Schaltung der Wicklungen eines Polpaares über zwei separate Wechselrichter kann der drehende Motor auch im Störungsfall weiter betrieben werden. Unter Störungsfall wird hier der Stromausfall in einer Wicklung verstanden, wobei dieser Stromausfall sowohl auf einen Schaden der Wicklung selbst als auch auf einen Schaden im entsprechenden Bereich eines Wechselrichters zurückzuführen sein kann. Das von dem Polpaar mit gestörter Phase ausgeübte Drehmoment ist dann in etwa halb so groß wie das im regulären Betriebsfall ausgeübte.

Problematischer stellt sich die Situation jedoch dar, wenn der Motor zum Stillstand gekommen ist. So sind insbesondere bei einem 6/4-Motor, das heißt einem Motor mit sechs Statorpolen und vier Rotorpolen, Stellungen denkbar, in denen ein Anlaufen des Motors im Störungsfall nicht möglich ist und auch nicht durch asymmetrische Übersteuerung benachbarter Pole kompensiert werden kann. Dies ist für sicherheitsrelevante Anwendungen ein untragbarer Zustand.

### Vorteile der Erfindung

Der erfindungsgemäße, elektrisch kommutierende Motor, insbesondere Reluktanzmotor, nach Anspruch 1 baut auf dem Stand der Technik dadurch auf, dass die Schaltmittel geeignet ausgelegt sind, um in einem Störungsfall in der Wicklung eines Pols zusätzlich zu der Beaufschlagung der verbleibenden Wicklung des gestörten Polpaares die Wicklungen eines benachbarten Polpaares jeweils mit einem elektrischen Strom zu beaufschlagen, wobei einer der zusätzlichen Ströme eine gegenüber der Richtung im ungestörten Betriebsfall umgekehrte Stromrichtung hat. Dies ermöglicht eine Ansteuerung des erfindungsgemäßen Motors bei geeigneter Einrichtung der Stromsteuermittel gemäß Anspruch 2, so dass der resultierende magnetische Fluss in dem Motor, welcher sich durch Überlagerung der von den einzelnen Strömen in den beaufschlagten Wicklungen induzierten Teilflüsse ergibt, im Wesentlichen die gleiche Form hat, wie der magnetische Fluss im ungestörten Betriebsfall. Daher wird auf den Rotor im Wesentlichen das gleiche Drehmoment ausgeübt, wie im ungestörten Fall. Der Motor kann also problemlos anlaufen.

Das erfindungsgemäße Verfahren nach Anspruch 10 baut auf dem Stand der Technik dadurch auf, dass im Störungsfall in der Wicklung eines Pols die Wicklungen eines benachbarten Polpaares zusätzlich mit je einem elektrischen Strom beaufschlagt werden, wobei einer der zusätzlichen Ströme eine gegenüber der Richtung im ungestörten Betriebsfall umgekehrte Stromrichtung hat. Eine derartige, erfindungsgemäße Ansteuerung des Motors hat den Vorteil, dass der resultierende magnetische Fluss, welcher sich durch Überlagerung der von den einzelnen Strömen in den beaufschlagten Wicklungen induzierten Teilflüsse ergibt, im Wesentlichen die gleiche Form hat, wie der magnetische Fluss im ungestörten Betriebsfall.

Der erfindungsgemäße Motor ist nach Anspruch 3 in besonders günstiger Weise ausgestaltet, da die Verwendung einer vollen H-Brückenschaltung auf einfache Weise eine Stromumkehr in der angesteuerten Wicklung oder den angesteuerten Wicklungen ermöglicht. Analoges gilt für die Ausgestaltung des erfindungsgemäßen Verfahrens nach Anspruch 11.

Die Vorzüge des erfindungsgemäßen Reluktanzmotors nach Anspruch 4 beziehungsweise die Vorzüge des erfindungsgemäßen Verfahrens nach Anspruch 12 bestehen vor allem darin, dass die grundlegende Energieversorgung redundant ausgestaltet ist, was zu einer weiter erhöhten Sicherheit und Fehlertoleranz beiträgt. Gemäß Anspruch 5 werden die in modernen Kraftfahrzeugen ohnehin vorhandenen separaten Bordnetze genutzt, um die vorgenannte Sicherheitserhöhung durch Redundanz zu erreichen, ohne die ansonsten damit verbundenen Kosten- und Platznachteile in Kauf nehmen zu müssen.

Die Ausführung gemäß Anspruch 6 trägt der Tatsache Rechnung, dass separate Bordnetze in einem Kraftfahrzeug üblicherweise unterschiedliche Spannungen aufweisen, insbesondere 14 Volt und 42 Volt. Wären die Wicklungen eines Polpaares, die aus Bordnetzen unterschiedlicher Spannung gespeist werden, gleich aufgebaut, würde dies zu unterschiedlichen Magnetfeldern an den Polen eines Paares und damit zu einer radialen Kraftkomponente auf den Rotor führen. Dies hätte eine erhöhte Belastung der Rotorlager sowie einen unrunden Lauf des Motors zur Folge. Dies wird durch eine Auslegung der einzelnen Wicklungen gemäß Anspruch 6 kompensiert.

Obwohl auch Ausführungen denkbar sind, bei denen sich die Wicklungen auf den Polen des Rotors befinden, ist eine Ausführung gemäß Anspruch 7 besonders vorteilhaft, da hierdurch die elektrische Kontaktierung der Wicklungen vereinfacht sowie das mit dem Rotor mitbewegte Gewicht und damit das zu überwindende Trägheitsmoment reduziert wird.

Weitere Vorteile der Erfindung ergeben sich aus den übrigen Unteransprüchen.

### Zeichnungen

Die Erfindung wird nachfolgend anhand der zugehörigen Zeichnungen noch näher erläutert.

Es zeigen
- Figur 1: ein schematisches Diagramm eines Reluktanzmotors;
- Figur 2: vier schematische Diagramme eines Reluktanzmotors in einer kritischen Winkelstellung unter unterschiedlichen Bestromungsbedingungen und
- Figur 3: ein Blockschaltbild.

### Beschreibung der Ausführungsbeispiele

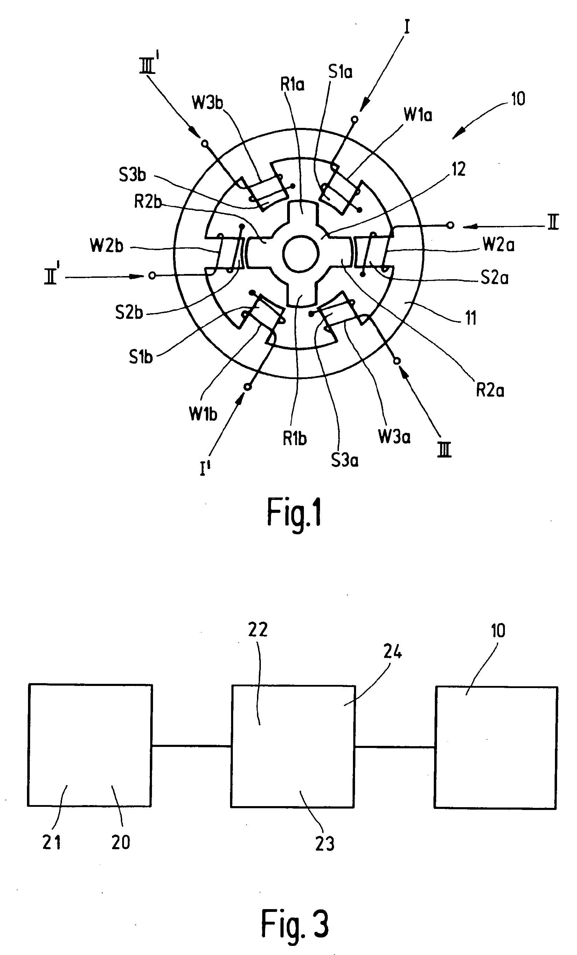

Figur 1 zeigt ein schematisches Diagramm eines elektrisch kommutierenden Motors, der als Reluktanzmotors 10 ausgebildet ist. Dieser ist aufgebaut aus einem äußeren Stator 11 und einem inneren Rotor 12. Der Stator 11 weist 6 Pole S1a, S2a, S3a, S1b, S2b und S3b auf. Die mit a und b bezeichneten Pole ansonsten gleicher Bezugszeichen sind einander diametral gegenüberliegend angeordnet. Auf ihnen befinden sich jeweils elektrisch leitfähige Wicklungen, W1a, W2a, W3a, W1b, W2b und W3b. Der Rotor 12 umfasst 4 Pole R1a, R2a, R1b, R2b. Die mit a und b bezeichneten Pole ansonsten gleicher Bezugszeichen sind einander diametral gegenüberliegend angeordnet. Im störungsfreien Betrieb wird während eines ersten Steuerintervalls die Wicklung W1a auf dem Stator-Pol S1a über einen (nicht dargestellten) ersten Wechselrichter mit der Phase I bestromt. Gleichzeitig wird die diametral gegenüberliegende Wicklung W1b auf dem Stator-Pol S1b über einen separaten, zweiten Wechselrichter mit der Phase I' bestromt. Die Wicklung W2a auf dem Stator-Pol S2a wird während eines zweiten Steuerintervalls von dem ersten Wechselrichter mit der Phase II bestromt. Gleichzeitig wird die Wicklung W2b auf dem Stator-Pol S2b über den zweiten Wechselrichter mit der Phase II' bestromt. Die Wicklung W3a auf dem Stator-Pol S3a wird während eines dritten Steuerintervalls über den ersten Wechselrichter mit der Phase III bestromt. Die diametral gegenüberliegende Wicklung W3b auf dem Stator-Pol S3b wird gleichzeitig über den zweiten Wechselrichter mit der Phase III' bestromt. Die Ansteuerung der Phasen erfolgt über geeignete Steuermittel in Abhängigkeit von der Winkelstellung des Rotors 12, der Drehgeschwindigkeit und der beabsichtigten Drehrichtung. Dem Fachmann sind eine Reihe von Ausführungsformen derartiger Steuermittel bekannt, die sowohl als elektronische wie auch als elektrische und/oder mechanische Vorrichtungen ausgeführt sein können.

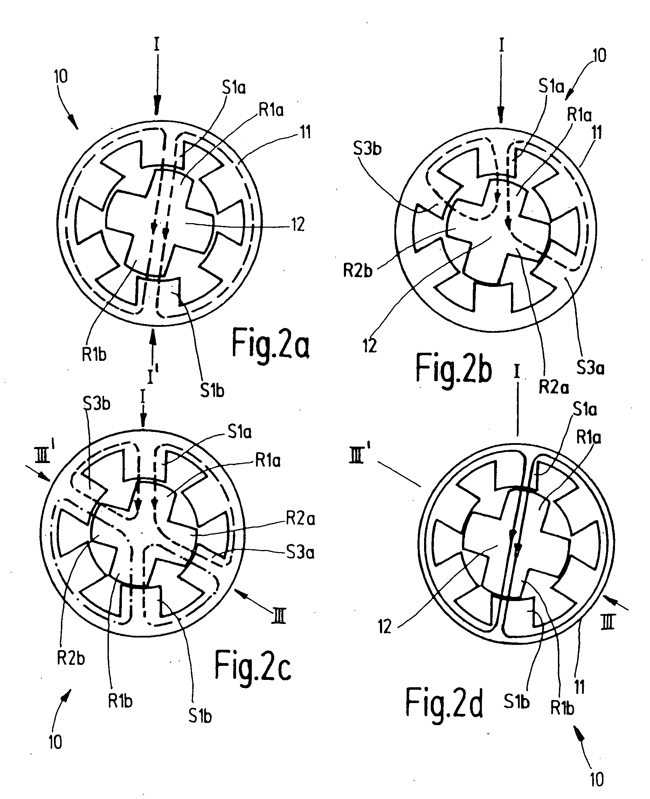

Figur 2a zeigt in einer vereinfachten Darstellung den Reluktanzmotor 3 in einer kritischen Stellung des Rotors 12. Beim störungsfreien Betrieb, wie er in Figur 2a dargestellt ist, werden in dieser Stellung die (nicht dargestellten) Wicklungen auf den Stator-Polen S1a und S1b mit den Phasen I beziehungsweise I' bestromt. Gestrichelt dargestellt ist der resultierende magnetische Fluss, durch die Pole S1a, R1a, R1b und S1b. In dieser Konstellation ist es problemlos möglich, dass der in der gezeigten Stellung stehende Rotor 12 bei der beschriebenen Bestromung anläuft.

Liegt jedoch eine Störung vor, welche eine Bestromung des Stator-Pols S1b mit der Phase I' verhindert, ergeben sich die in Figur 2b gezeigten, gestrichelt dargestellten magnetischen Flüsse über die Pole S1a, R1a, R2b und S3b beziehungsweise S1a, R1a, R2a und S3a. Ist der Rotor 12 in Ruhe, so dass er nicht von seinem Trägheitsmoment über diese kritische Stellung hinweggetragen wird, verhindert das dargestellte magnetische Flussbild ein Anlaufen des Motors aus dieser Stellung.

Figur 2c zeigt das Resultat einer erfindungsgemäßen Ansteuerung des Reluktanzmotors 10. Sind die Wechselrichter nämlich so eingerichtet, dass sie in der Lage sind, zusätzlich zur Bestromung des Stator-Pols S1a mit der Phase I (bei wegen Störung ausgefallener Bestromung des Stator-Pols S1b mit der Phase I') die Stator-Pole S3a und S3b gegensinnig zu bestromen, das heißt den Pol S3a mit herkömmlicher Stromrichtung und den Pol S3b mit einer Stromrichtung zu beaufschlagen, die der im ungestörten Betriebsfall angewendeten entgegengerichtet ist, ergeben sich die in Figur 2c gezeigten magnetischen Teilflüsse. Gestrichelt dargestellt sind die sich durch Bestromung mit Phase I ergebenden Teilflüsse gemäß Figur 2b. Strichpunktiert dargestellt sind die Teilflüsse, die sich aus der erfindungsgemäßen Bestromung der Phase III und -III', wobei das Minuszeichen die umgekehrte Stromrichtung der Phase III' symbolisiert.

Figur 2d zeigt die aus den Teilflüssen von Figur 2c zusammengesetzten, resultierenden magnetischen Flüsse als durchgezogene Linien. Bei geeignet abgestimmter Stromstärke ergeben sich im Wesentlichen die gleichen Flusslinien, wie in Figur 2a, wo der ungestörte Betriebsfall dargestellt wurde. Bei dieser Konstellation kann der Motor auch aus dem Stillstand problemlos anlaufen.

Zur Verwirklichung der erfindungsgemäßen Ansteuerung des Reluktanzmotors werden die Wechselrichter für jede Phase vorzugsweise mit einer vollen H-Brückenschaltung versehen, die zu einer Umkehrung der Bestromungsrichtung in der Lage ist.

Die Figur 3 verdeutlicht die Ausbildung der Stromquelle 20 als Gleichstromquelle 21, die über Schaltmittel 23 aufweisende Stromsteuermittel 22 mit dem Reluktanzmotor 10 verbunden ist. Die Schaltmittel 23 sind bevorzugt als Wechselrichter 24 ausgebildet.

Während die Erfindung insbesondere mit Bezug auf ein bevorzugtes Ausführungsbeispiel gezeigt und beschrieben worden ist, versteht sich für den Fachmann, dass Änderungen in Gestalt und Einzelheiten gemacht werden können, ohne von dem Gedanken und Umfang der Erfindung abzuweichen. Insbesondere lässt sich die Anzahl der Statorund/oder Rotorpole variieren, wobei auch mehrere, vorteilhafterweise nicht benachbarte Polpaare gleichphasig bestromt werden können. Auch die relative Konstellation von Rotor und Stator ist in weiten Bereichen modifizierbar, so dass zum Beispiel ein einen zentralen Stator umkreisender, äußerer Rotor realisierbar ist. Dementsprechend soll die Offenbarung der vorliegenden Erfindung nicht einschränkend sein. Stattdessen soll die Offenbarung der vorliegenden Erfindung den Umfang der Erfindung veranschaulichen, der in den nachfolgenden Ansprüchen dargelegt ist.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Elektrisch kommutierender Motor, insbesondere geschalteter Reluktanzmotor, umfassend zwei zueinander bewegliche Basiselemente, nämlich einen Rotor (12) und einen Stator (11), welche beide je eine Mehrzahl von Polen (S1a, S2a, S3a, S1b, S2b, S3b; R1a, R2a, R1b, R2b) zur Zusammenwirkung mit Polen (R1a, R2a, R1b, R2b; S1a, S2a, S3a, S1b, S2b, S3b) des jeweils anderen Basiselementes (11, 12) aufweisen, wobei Pole (S1a, S1b; S2a, S2b; S3a, S3b) wenigstens eines Basiselementes (11) einander paarweise zugeordnet und mit elektrisch leitfähigen Wicklungen (W1a, W1b; W2a, W2b; W3a, W3b) zur Beaufschlagung mit einem gesteuerten elektrischen Strom versehen sind, und weiter umfassend Stromsteuermittel (22), welche für jedes Polpaar (S1a, S1b; S2a, S2b; S3a, S3b) derart eingerichtet sind, dass im Betriebsfall die Wicklungen (W1a, W1b) auf Polen eines Paares (S1a, S1b) von jeweils separaten Schaltmitteln (23), welche mit wenigstens einer Stromquelle (20) verbunden sind, während eines gemeinsamen Steuerintervalls mit Strom beaufschlagt werden, während die Wicklungen (W3a, W3b) eines benachbarten Polpaares (S3a, S3b) gemeinsam während eines zeitversetzten Steuerintervalls mit Strom beaufschlagt werden, **dadurch gekennzeichnet, dass** die Schaltmittel (23) geeignet ausgelegt sind, um in einem Störungsfall in der Wicklung (W1b) eines Pols (S1b) zusätzlich zu der Beaufschlagung der verbleibenden Wicklung (W1a) des gestörten Polpaares (S1a, S1b) die Wicklungen (W3a, W3b) eines benachbarten Polpaares (S3a, S3b) jeweils mit einem elektrischen Strom zu beaufschlagen, wobei einer der zusätzlichen Ströme eine gegenüber der Richtung im ungestörten Betriebsfall umgekehrte Stromrichtung hat.

2. Motor nach Anspruch 1, **dadurch gekennzeichnet, dass** die Stromsteuermittel (22) derart eingerichtet sind, dass im Störungsfall die Wicklungen (W3a, W3b) eines dem gestörten Polpaar (S1a, S1b) benachbarten Polpaares (S3a, S3b) zusätzlich mit je einem elektrischen Strom beaufschlagt werden, wobei einer der zusätzlichen Ströme eine gegenüber der Richtung im ungestörten Betriebsfall umgekehrte Stromrichtung hat.

3. Motor nach einem der vorangehenden Ansprüche, **dadurch gekennzeichnet, dass** die separaten Schaltmittel (23) jeweils als Wechselrichter (24) mit je einer vollen H-Brückenschaltung für gleichphasig mit Strom zu beaufschlagende Wicklungen ausgeführt sind.

4. Motor nach einem der vorangehenden Ansprüche, **dadurch gekennzeichnet, dass** die separaten Schaltmittel (23) mit jeweils einer separaten Stromquelle (20) verbunden sind.

5. Motor nach Anspruch 4, **dadurch gekennzeichnet, dass** die separaten Stromquellen (20) die separaten Bordnetze eines Kraftfahrzeugs mit zwei Bordnetzen sind.

6. Motor nach einem der Ansprüche 4 oder 5, **dadurch gekennzeichnet, dass** die Wicklungen (W1a, W1b; W2a, W2b; W3a, W3b) auf den Polen (S1a, S1b; S2a, S2b; S3a, S3b) eines Paares so ausgelegt sind, dass bei Beaufschlagung mit Strom aus separaten Stromquellen (20) unterschiedlicher Spannung in den Polen (S1a, S1b; S2a, S2b; S3a, S3b) ein in etwa gleich großes Magnetfeld erzeugt wird.

7. Motor nach einem der vorangehenden Ansprüche, **dadurch gekennzeichnet, dass** sich die Wicklungen (W1a, W1b; W2a, W2b; W3a, W3b) auf den Polen (S1a, S1b; S2a, S2b; S3a, S3b) des Stators (11) befinden.

8. Motor nach einem der vorangehenden Ansprüche, **dadurch gekennzeichnet, dass** die Pole wenigstens eines Basiselements (11) einander paarweise gegenüberliegend angeordnet sind.

9. Motor nach einem der vorangehenden Ansprüche, **dadurch gekennzeichnet, dass** die Stromquelle(n) (20) (eine) Gleichstromquelle(n) (21) ist (sind) .

10. Verfahren zur Ansteuerung eines elektrisch kommutierenden Motors, insbesondere geschalteten Reluktanzmotors, umfassend zwei zueinander bewegliche Basiselemente, nämlich einen Rotor (12) und einen Stator (11), welche beide je eine Mehrzahl von Polen (S1a, S2a, S3a, S1b, S2b, S3b; R1a, R2a, R1b, R2b) zur Zusammenwirkung mit Polen (R1a, R2a, R1b, R2b; S1a, S2a, S3a, S1b, S2b, S3b) des jeweils anderen Basiselementes (11, 12) aufweisen, wobei Pole (S1a, S1b; S2a, S2b; S3a, S3b) wenigstens eines Basiselementes (11) einander paarweise zugeordnet und mit elektrisch leitfähigen Wicklungen (W1a, W1b; W2a, W2b; W3a, W3b) zur Beaufschlagung mit einem gesteuerten elektrischen Strom versehen sind, wobei für jedes Polpaar (S1a, S1b; S2a, S2b; S3a, S3b) im Betriebsfall die Wicklungen (W1a, W1b) auf Polen eines Paares (S1a, S1b) von jeweils separaten Schaltmitteln (23), welche mit wenigstens einer Stromquelle (20) verbunden sind, während eines gemeinsamen Steuerintervalls mit Strom beaufschlagt werden, während die Wicklungen (W3a, W3b) eines benachbarten Polpaares (S3a, S3b) gemeinsam während eines zeitversetzten Steuerintervalls mit Strom beaufschlagt werden, **dadurch gekennzeichnet, dass** in einem Störungsfall in der Wicklung (W1b) eines Pols (S1b) die Wicklungen (W3a, W3b) eines benachbarten Polpaares (S3a, S3b) zusätzlich mit je einem elektrischen Strom beaufschlagt werden, wobei einer der zusätzlichen Ströme eine gegenüber der Richtung im ungestörten Betriebsfall umgekehrte Stromrichtung hat.

11. Verfahren nach Anspruch 10, **dadurch gekennzeichnet, dass** die separaten Schaltmittel (23) jeweils als Wechselrichter (24) mit je einer vollen H-Brückenschaltung für gleichphasig mit Strom zu beaufschlagende Wicklungen ausgeführt sind.

12. Verfahren nach einem der Ansprüche 10 oder 11, **dadurch gekennzeichnet, dass** die separaten Schaltmittel (23) mit jeweils einer separaten Gleichstromquelle (21) verbunden sind.

13. Verfahren nach einem der Ansprüche 10 bis 12, **dadurch gekennzeichnet, dass** der Störungsfall ein Stromausfall ist.
